# FASCICULE DE BREVET EUROPEEN

(11) **EP 0 628 842 B1**
(45) Date de publication et mention de la délivrance du brevet: **29.04.1998**
(21) Numéro de dépôt: 94401281.4
(22) Date de dépôt: 08.06.1994
(51) Int. Cl.: G02B 6/38

(54) **Dispositif pour connecter une fibre optique monomode en verre fluoré à une fibre optique monomode en silice**
Vorrichtung zum Verbinden einer F-dotierten Monomodefaser mit einer SiO2 Monomodefaser
Apparatus for connecting a F-doped single-mode fibre with a silica single mode fibre

(30) Priorité: 09.06.1993 FR 9306934
(43) Date de publication de la demande: 14.12.1994
(73) Titulaire: ALCATEL ALSTHOM COMPAGNIE GENERALE D'ELECTRICITE, 75008 Paris (FR)
(72) Inventeur: Artigaud, Serge, F-91350 Grigny (FR)
(74) Mandataire: Pothet, Jean Rémy Emile Ludovic

(56) Documents cités:
- US-A- 4 749 253
- PATENT ABSTRACTS OF JAPAN vol. 17, no. 58 (P-1481) 4 Février 1993 & JP-A-04 268 538 (NTT)
- PATENT ABSTRACTS OF JAPAN vol. 16, no. 146 (E-1188) 10 Avril 1992 & JP-A-04 003 482 (NTT)
- PATENT ABSTRACTS OF JAPAN vol. 6, no. 46 (P-107) 24 Mars 1982 & JP-A-56 161 512 (TOSHIBA CORP.)
- JOURNAL OF LIGHTWAVE TECHNOLOGY., vol.4, no.8, Août 1986, NEW YORK US pages 1260 - 1266 H.TOKIWA ET.AL. 'Ultra-loss fluoride-glass single-mode fiber design'

## Description

La présente invention concerne un dispositif pour connecter une fibre optique monomode en verre fluoré à une fibre optique monomode en silice.

Le problème est de connecter une fibre en verre fluoré avec une fibre optique monomode en silice dont le diamètre de coeur est différent de celui de la fibre en verre fluoré, ces deux fibres ayant toutes deux des diamètres extérieurs de gaine optique sensiblement identiques.

A titre indicatif, le diamètre de coeur d'une fibre en verre fluoré est en général de l'ordre de 2 mm, et celui d'une fibre en silice de 8 à 9 mm ; le diamètre de gaine optique extérieur de ces deux fibres peut être de 125 mm ± 2 µm

Les connecteurs connus actuellement ne permettent pas d'assurer correctement la liaison. En outre, il n'est pas possible de souder une fibre fluorée et une fibre en silice, car cette dernière fond vers 800°C, alors que la fibre fluorée fond vers 150°C à 200°C et ne supporterait donc pas la température de fusion de la fibre en silice.

La présente invention a pour but de proposer un dispositif permettant d'assurer une telle connexion.

La présente invention a pour objet un dispositif pour connecter une fibre optique monomode en verre fluoré à une fibre optique monomode en silice de diamètre de coeur différent de celui de la fibre optique monomode en verre fluoré, ces deux fibres ayant des diamètres de gaine optique extérieurs sensiblement identiques, caractérisé par le fait qu'il comporte :
- un premier tronçon de fibre en verre fluoré et un second tronçon de fibre en silice, ayant des diamètres de coeur sensiblement identiques, compris entre les diamètres différents des coeurs des fibres à connecter, et des diamètres de gaine optique extérieurs sensiblement identiques à ceux des fibres à connecter, lesdits deux tronçons de fibre ayant chacun une première extrémité disposée en regard de l'autre et une seconde extrémité opposée destinée à être raccordée, respectivement, à la fibre optique monomode en verre fluoré et à la fibre optique monomode en silice, et
- des moyens mécaniques d'alignement et d'immobilisation desdits deux tronçons de fibres, les extrémités en regard de ces tronçons étant coupées en biais et liées entre elles par une résine dont la valeur de l'indice optique est comprise entre celles des indices optiques des coeurs desdits tronçons.

Selon un mode particulier de réalisation, le diamètre du coeur de la fibre en verre fluoré est de l'ordre de 2 µm, celui du coeur de la fibre en silice est de l'ordre de 8 µm, leurs diamètres de gaine optique extérieurs étant tous deux de l'ordre de 125 µm, et les diamètres de coeur des tronçons de fibres sont tous deux compris entre 4 et 6 µm et leurs diamètres de gaine optique extérieurs de l'ordre de 125 µm.

Avec un tel dispositif, on peut alors relier de manière connue, par soudage, le premier tronçon de fibre en verre fluoré à la fibre fluorée et le second tronçon de fibre en silice à la fibre en silice.

De préférence, lesdits premier et second tronçons de fibre ont sensiblement le même diamètre de mode.

A titre d'exemple ledit verre fluoré est choisi parmi les verres ZBLAN de formulation ZrF₄ - BaF₂ - LaF₃ - AlF₃ - NaF, et les verres BIZYT de formulation BaF₂ - InF₃ - ZnF₂ - YB₃ - ThF₄.

Selon un mode de réalisation, lesdits deux tronçons de fibres sont dépourvus de gaine protectrice dans leurs portions d'extrémité en regard et munis de gaine protectrice au-delà, lesdits moyens d'immobilisation comportant sur une embase des moyens de serrage des portions des deux tronçons de fibres munies de leur gaine de protection et des moyens de serrage des portions des deux tronçons de fibres dénudées au voisinage desdites extrémités à relier.

De préférence, lesdits moyens d'alignement comportent, au niveau desdites portions de tronçons de fibres dénudées, des piges d'alignement en carbure de tungstène.

D'autres caractéristiques et avantages de la présente invention apparaîtront au cours de la description suivante d'un mode de réalisation donné à titre illustratif mais nullement limitatif. Dans le dessin annexé :
- la figure 1 est une vue schématique en élévation d'un dispositif selon l'invention,
- la figure 2 est une vue schématique en coupe transversale selon la ligne II-II de la figure 1 d'un tronçon de fibre dénudé immobilisé du dispositif de la figure 1.
- la figure 3 est une vue schématique en coupe longitudinale de la connexion entre les deux tronçons de fibres du dispositif de la figure 1.

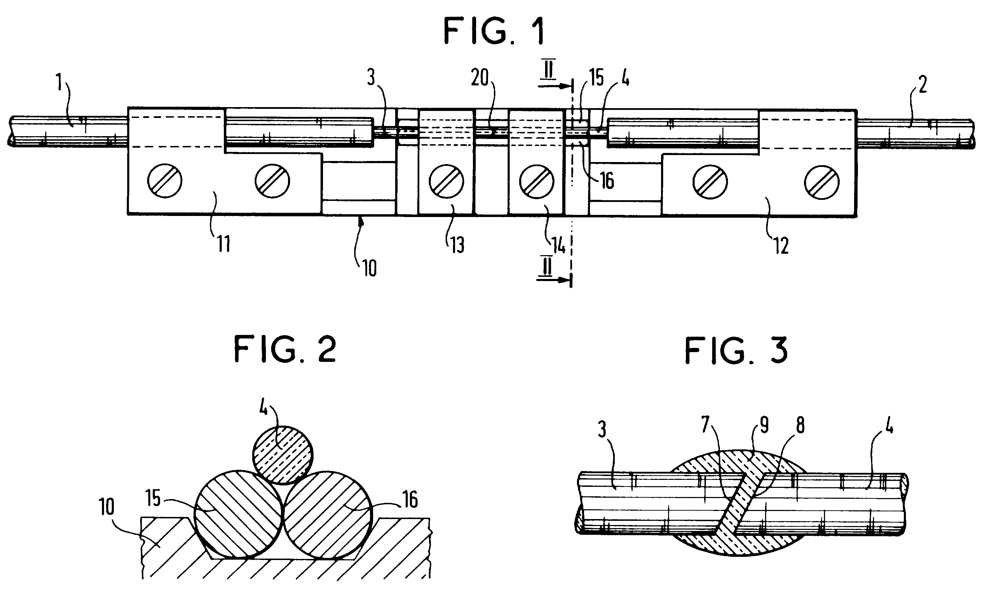

Le dispositif apparaissant dans la figure 1 comporte un premier tronçon de fibre 1 en verre fluoré muni de sa gaine protectrice, et référencé 3 lorsqu'il est dénudé. Son diamètre de coeur est de 5 µm et son diamètre de gaine optique de 125 µm. Le verre de coeur est un verre ZBLAN.

Un second tronçon de fibre 2 en silice muni de sa gaine protectrice est référencé 4 lorsqu'il est dénudé. Son diamètre de coeur est également de 5 µm et son diamètre de gaine optique de 125 µm.

Les moyens d'immobilisation de ces deux tronçons comportent une embase 10, des moyens de serrage 11 et 12 des tronçons 1 et 2 gainés et des moyens de serrage 13 et 14 des tronçons 3 et 4 dégainés.

On voit dans la figure 2, la portion de tronçon de fibre optique dénudée 4 calée contre deux piges juxtaposées 15 et 16 qui sont des cylindres en carbure de tungstène de haute précision mécanique. La portion de tronçon de fibre optique dénudée 3 est calée de la même manière.

La connexion 20 proprement dite entre les tronçons 3 et 4 est visible plus clairement dans la figure 3. Les extrémités 7 et 8 des portions de tronçons dénudées 3 et 4 sont coupées en biais pour éviter les réflexions parasites, et collées entre elles par une résine 9 de la marque VITRALIT. Son indice optique n_{D} est de 1,503 ; à la longueur d'onde d'utilisation des fibres en verre fluoré (1,55 µm) cet indice est de 1,48 environ.

On raccorde ensuite sans difficulté particulière le tronçon 1 à une fibre monomode en verre fluoré et le tronçon 2 à une fibre monomode en silice.

On peut connecter ainsi une fibre monomode en verre fluoré à des composants standards, tels que des multiplexeurs, équipés de fibres monomodes en silice classiques.

Un tel dispositif est susceptible de fonctionner dans une gamme de températures comprises entre +20°C et 110°C.

## Revendications

1. Dispositif pour connecter une fibre optique monomode en verre fluoré à une fibre optique monomode en silice de diamètre de coeur différent de celui de la fibre optique monomode en verre fluoré, ces deux fibres ayant des diamètres de gaine optique extérieurs sensiblement identiques, caractérisé par le fait qu'il comporte :
- un premier tronçon de fibre (1,3) en verre fluoré et un second tronçon de fibre (2,4) en silice, ayant des diamètres de coeur sensiblement identiques, compris entre les diamètres différents des coeurs des fibres à connecter, et des diamètres de gaine optique extérieurs sensiblement identiques à ceux des fibres à connecter, lesdits deux tronçons de fibre (1,3;2,4) ayant chacun une première extrémité (7,8) disposée en regard de l'autre et une seconde extrémité opposée destinée à être raccordée, respectivement, à la fibre optique monomode en verre fluoré et à la fibre optique monomode en silice, et
- des moyens mécaniques (10-16) d'alignement et d'immobilisation desdits deux tronçons de fibres (1,3;2,4), les extrémités en regard (7,8) de ces tronçons étant coupées en biais et liées entre elles par une résine (9) dont la valeur de l'indice optique est comprise entre celles des indices optiques des coeurs desdits tronçons.

2. Dispositif selon la revendication 1 pour connecter une fibre monomode en verre fluoré de diamètre de coeur de l'ordre de 2 µm à une fibre monomode en silice de diamètre de coeur de l'ordre de 8 µm, ces deux fibres ayant toutes deux un diamètre de gaine optique extérieur de l'ordre de 125 µm, caractérisé en ce que les diamètres de coeur des deux tronçons de fibres (1,3;2,4) sont tous deux compris entre 4 et 6 µm et leurs diamètres de gaine optique extérieurs de l'ordre de 125 µm.

3. Dispositif selon l'une des revendications 1 ou 2, caractérisé par le fait que lesdits premier (1,3) et second (2,4) tronçons de fibres ont sensiblement le même diamètre de mode.

4. Dispositif selon l'une des revendications 1 à 3, caractérisé par le fait que ledit verre fluoré est choisi parmi les verres ZBLAN de formulation ZrF₄ - BaF₂ - LaF₃ - AlF₃ - NaF, et les verres BIZYT de formulation BaF₂ - InF₃ - ZnF₂ - YB₃ - ThF₄.

5. Dispositif selon l'une des revendications précédentes, caractérisé par le fait que lesdits deux tronçons de fibres (1,3;2,4) sont dépourvus de gaine protectrice dans leurs portions d'extrémité (3,4) en regard et munis de gaine protectrice au-delà, lesdits moyens d'immobilisation (10-16) comportant sur une embase (10) des moyens de serrage (11,12) des portions (1,3) des deux tronçons de fibres munies de leur gaine de protection et des moyens de serrage (13,14) des portions (2,4) des deux tronçons de fibres dénudées au voisinage desdites extrémités (7,8) à relier.

6. Dispositif selon la revendication 5, caractérisé par le fait que lesdits moyens d'alignement (10-16) comportent, au niveau desdites portions (2,4) de tronçons de fibres dénudées, des piges d'alignement (15,16) en carbure de tungstène.

## Patentansprüche

1. Vorrichtung zum Verbinden einer optischen Monomodefaser aus F-dotiertem Glas mit einer optischen Monomodefaser aus SiO₂ mit einem Kerndurchmesser, der sich von dem der optischen Monomodefaser aus F-dotiertem Glas unterscheidet, wobei diese zwei Fasern im wesentlichen identische Außendurchmesser des optischen Mantels aufweisen, dadurch gekennzeichnet, daß sie umfaßt:
- einen ersten Faserabschnitt (1, 3) aus F-dotiertem Glas und einen zweiten Faserabschnitt (2, 4) aus SiO₂, die im wesentlichen identische Kerndurchmesser, welche zwischen den verschiedenen Kerndurchmessern der zu verbindenden Fasern liegen, und Außendurchmesser des optischen Mantels, die im wesentlichen mit denen der zu verbindenden Fasern identisch sind, aufweisen, wobei die zwei Faserabschnitte (1, 3; 2, 4) jeweils ein erstes Ende (7, 8), das dem anderen gegenüberliegend angeordnet ist, und ein entgegengesetztes zweites Ende aufweisen, das dazu bestimmt ist, mit der optischen Monomodefaser aus F-dotiertem Glas bzw. der optischen Monomodefaser aus SiO₂ verbunden zu werden, und
- mechanische Mittel (10-16) zur Ausrichtung und zum Festhalten dieser zwei Faserabschnitte (1, 3; 2, 4), wobei die sich gegenüberliegenden Enden (7, 8) dieser Abschnitte schräg zugeschnitten und durch ein Harz (9) miteinander verbunden sind, dessen Brechzahl zwischen den Brechzahlen der Kerne dieser Abschnitte liegt.

2. Vorrichtung nach Anspruch 1 zum Verbinden einer Monomodefaser aus F-dotiertem Glas mit einem Kerndurchmesser von etwa 2 µm mit einer Monomodefaser aus SiO₂ mit einem Kerndurchmesser von etwa 8 µm, wobei die zwei Fasern beide einen Außendurchmesser des optischen Mantels von etwa 125 µm aufweisen, dadurch gekennzeichnet, daß die Kerndurchmesser der zwei Faserabschnitte (1, 3; 2, 4) beide zwischen 4 und 6 µm und die Außendurchmesser ihrer optischen Mäntel etwa 125 µm betragen.

3. Vorrichtung nach einem der Ansprüche 1 oder 2, dadurch gekennzeichnet, daß der erste (1, 3) und der zweite (2, 4) Faserabschnitt im wesentlichen den gleichen Modenfleckdurchmesser besitzen.

4. Vorrichtung nach einem der Ansprüche 1 bis 3, dadurch gekennzeichnet, daß das F-dotierte Glas unter den ZBLAN-Gläsern mit der Formulierung ZrF₄ - BaF₂ - LaF₃ - AlF₃ - NaF und den BIZYT-Gläsern mit der Formulierung BaF₂ - InF₃ - ZnF₂ - YB₃ - ThF₄ ausgewählt wird.

5. Vorrichtung nach einem der vorhergehenden Ansprüche, dadurch gekennzeichnet, daß die zwei Faserabschnitte (1, 3; 2, 4) in ihren gegenüberliegenden Endbereichen (3, 4) ohne Schutzmantel und jenseits dieser Bereiche mit Schutzmantel vorliegen, wobei die Mittel zum Festhalten (10-16) auf einer Basis (10) Mittel zur Klemmung (11, 12) der mit ihrem Schutzmantel versehenen Bereiche (1, 2) der zwei Faserabschnitte und Mittel zur Klemmung (13, 14) der an die zu verbindenden Enden (7, 8) angrenzenden nackten Bereiche (3, 4) der zwei Faserabschnitte umfassen.

6. Vorrichtung nach Anspruch 5, dadurch gekennzeichnet, daß die Mittel zur Ausrichtung (10-16) in Höhe der nackten Bereiche (3, 4) der Faserabschnitte Ausrichtungspeilstäbe (15, 16) aus Wolframcarbid umfassen.

## Claims

1. A device for connecting a monomode optical fiber made of fluoride glass to a monomode optical fiber made of silica and having a core diameter different from that of the fluoride-glass monomode optical fiber, the outside diameters of the cladding of the two fibers being substantially equal, the device being characterized by the fact that it includes:
- a first fiber length (1, 3) which is made of fluoride glass, and a second fiber length (2, 4) which is made of silica, both having substantially equal core diameters lying between the different core diameters of the fibers to be connected, and both having cladding outside diameters substantially equal to those of the fibers to be connected, said two fiber lengths (1, 3; 2, 4) each having a first end (7, 8) disposed facing the other first end and an opposite second end intended to be fastened respectively to the fluoride-glass monomode optical fiber and the silica monomode optical fiber, and
- mechanical means (10-16) for aligning and holding said two fiber lengths (1, 3; 2, 4), the facing ends (7, 8) of said lengths being cut at a slant and being connected together by a resin (9) having a refractive index of a value that lies between the values of the refractive indices of the cores of said lengths.

2. A device according to claim 1 for connecting a fluoride-glass monomode fiber having a core diameter of about 2 µm to a silica monomode fiber having a core diameter of about 8 µm, both fibers having a cladding outside diameter of about 125 µm, the device being characterized in that the core diameters of both fiber lengths (1, 3; 2, 4) lie in the range 4 µm to 6 µm and their cladding outside diameters are about 125 µm.

3. A device according to claim 1 or 2, characterized by the fact that said first fiber length (1, 3) and said second fiber length (2, 4) have substantially the same mode diameter.

4. A device according to any one of claims 1 to 3, characterized by the fact that said fluoride glass is chosen from ZBLAN glass of formulation ZrF₄, BaF₂, LaF₃, AlF₃, and NaF, and from BIZYT glass of formulation BaF₂, InF₃, ZnF₂, YB₃, and ThF₄.

5. A device according to any preceding claim, characterized by the fact that neither of said two fiber lengths (1, 3; 2, 4) is provided with a protective sheath at its facing end portion (3, 4), but is provided with a protective sheath therebeyond, said holding means (10-16) including, on a base (10), clamping means (11, 12) for clamping the sheathed portions (1, 2) of the two fiber lengths, and clamping means (13, 14) for clamping the bare portions (3, 4) of the two fiber lengths in the vicinity of said ends (7, 8) to be connected.

6. A device according to claim 5, characterized by the fact that said alignment means (10-16) include, in the vicinity of said bare fiber length portion (3, 4), alignment gauge rods (15, 16) made of tungsten carbide.
